# EUROPEAN PATENT SPECIFICATION

(11) **EP 2 903 215 B1**
(45) Date of publication and mention of the grant of the patent: **22.01.2020**
(21) Application number: 13840818.2
(22) Date of filing: 27.09.2013
(51) Int. Cl.: H04L 12/28, G06Q 50/06, H02J 13/00, H04L 12/70, G05F 1/66, H04L 29/12, H02J 3/28, H02J 3/32, H02J 3/38, H02J 7/35

(54) **MANAGEMENT METHOD, CONTROL DEVICE, AND COMMUNICATION PROCESSING DEVICE**
VERWALTUNGSVERFAHREN, STEUERUNGSVORRICHTUNG UND KOMMUNIKATIONSVERARBEITUNGSVORRICHTUNG
PROCÉDÉ DE GESTION, DISPOSITIF DE COMMANDE ET DISPOSITIF DE TRAITEMENT DE COMMUNICATION

(30) Priority: 27.09.2012 JP 2012215298
(43) Date of publication of application: 05.08.2015
(73) Proprietor: Kyocera Corporation, Kyoto-shi, Kyoto 612-8501 (JP)
(72) Inventor: MIYAKE, Takashi, Kyoto-shi Kyoto 612-8501 (JP); NAKAMURA, Kazutaka, Kyoto-shi Kyoto 612-8501 (JP)
(74) Representative: SSM Sandmair
(86) International application number: PCT/JP2013/076230
(87) International publication number: WO 2014/051038

(56) References cited:
- EP-A2- 2 587 719
- DE-A1-102010 019 376
- JP-A- H11 288 304
- JP-A- 2005 258 834
- JP-A- 2006 325 271
- JP-A- 2007 096 972
- JP-A- 2007 181 144
- JP-A- 2008 172 462
- JP-A- 2009 211 308
- US-A1- 2007 135 973
- US-A1- 2007 183 318
- US-A1- 2011 153 107
- US-A1- 2012 221 718
- US-A1- 2013 245 841
- Echonet Consortium: "-i - ECHONET Lite SPECIFICATION II ECHONET Lite Communication Middleware Specification", , 3 September 2012 (2012-09-03), pages 1-52, XP055112237, Retrieved from the Internet: URL:http://www.echonet.gr.jp/english/spec/ pdf_v100_lite_e/SpecLiteVer.1.0_e_02.pdf [retrieved on 2014-04-04]
- Echonet Consortium: "i ECHONET SPECIFICATION APPENDIX Detailed Requirements for ECHONET Device objests Contents", , 13 September 2012 (2012-09-13), pages i-3-346, XP055265908, Retrieved from the Internet: URL:https://echonet.jp/wp/wp-content/uploa ds/pdf/General/Standard/Release/Release_A_ en/SpecAppendixA.pdf [retrieved on 2016-04-15]
- "IEEE Guide for Smart Grid Interoperability of Energy Technology and Information Technology Operation with the Electric Power System (EPS), End-Use Applications, and Loads;IEEE Std 2030-2011", IEEE STANDARD, IEEE, PISCATAWAY, NJ, USA, 10 September 2011 (2011-09-10), pages 1-126, XP017694672, ISBN: 978-0-7381-6727-5
- "IEEE P2030(TM)/D5.0 Draft Guide for Smart Grid Interoperability of Energy Technology and Information Technology Operation With the Electric Power System (EPS), and End-Use Applications and Loads ; P2030_Draft", IEEE DRAFT; P2030_DRAFT_5.0, IEEE-SA, PISCATAWAY, NJ USA, vol. msc.upamd, 7 April 2011 (2011-04-07), pages 1-126, XP068029376, [retrieved on 2011-04-07]

## Description

### TECHNICAL FIELD

The present invention relates to a management method used in a management system having an equipment to which a dynamic address is dynamically assigned and a control apparatus that performs communication with the equipment via a predetermined network using the dynamic address assigned to the equipment, and relates also to a control apparatus and a communication processing apparatus.

### BACKGROUND ART

In recent years, a power management system having a plurality of equipments, and a control apparatus which controls the plurality of equipments has been proposed (for example, Patent Literature 1). The plurality of equipments include, for example, household electrical appliances such as air conditioners and illumination, and distributed power sources such as a photovoltaic cell apparatus, a storage battery apparatus, and a fuel cell apparatus. The control apparatus, for example, is referred to as HEMS (Home Energy Management System), SEMS (Store Energy Management System), BEMS (Building Energy Management System), FEMS (Factory Energy Management System), and CEMS (Cluster/Community Energy Management System).

For popularizing the above-described management system, commonization of the message format between the plurality of equipments and the control apparatus is effective, and such a commonization of the message format is being tested.

### CITATION LIST

### PATENT LITERATURE

Patent Literature 1: Japanese Patent Application Publication No. 2010-128810.
Non-Patent Literature 1: ECHONET Lite SPECIFICATION II ECHONET Lite Communication Middleware Specification (2012)
Non-Patent Literature 2: ECHONET SPECIFICATION APPENDIX Detailed Requirements for ECHONET Device objests Contents (2012)

### SUMMARY OF INVENTION

In the above-described management system, it is assumed that a plurality of equipments and a control apparatus may be connected via a router to which a global IP address is assigned. In such a case, the router functions as a DHCP (Dynamic Host Configuration Protocol) server and assigns a local IP address to the plurality of equipments and the control apparatus. That is, it may be possible that the local IP addresses of the plurality of equipments are changed. In such a case, when the control apparatus manages the equipments by the local IP address, if the local IP address assigned to the equipment is changed, then the control apparatus may not be capable of appropriately manage the equipment.

Therefore, the present invention has been achieved to resolve the above-described problem and an object thereof is to provide a management method, a control apparatus, and a communication processing apparatus, which can appropriately manage an equipment even when a dynamic address (local IP address) assigned to the equipment may be changed.

The invention is defined by the appended independent claims. Advantageous embodiments are defined in the dependent claims.

According to the present invention, it is possible to provide a management method, a control apparatus, and a communication processing apparatus, which can appropriately manage an equipment even when a dynamic address (local IP address) assigned to the equipment may be changed.

### BRIEF DESCRIPTION OF DRAWINGS

[Fig. 1] Fig. 1 is a diagram showing an energy management system 100 according to a first embodiment.
[Fig. 2] Fig. 2 is a diagram showing a consumer's facility 10 according to the first embodiment.
[Fig. 3] Fig. 3 is a diagram showing a network configuration according to the first embodiment.
[Fig. 4] Fig. 4 is a diagram showing a case where the first embodiment is applied.
[Fig. 5] Fig. 5 is a diagram showing an EMS 200 according to the first embodiment.
[Fig. 6] Fig. 6 is a diagram showing a storage battery apparatus 140 according to the first embodiment.
[Fig. 7] Fig. 7 is a sequence diagram showing a management method according to the first embodiment.
[Fig. 8] Fig. 8 is a sequence diagram showing a management method according to a first modification.

### DESCRIPTION OF EMBODIMENTS

Hereinafter, a control apparatus and control method according to embodiments of the present invention will be described with reference to the drawings. In the following drawings, identical or similar components are denoted by identical or similar reference numerals.

It should be understood that the drawings are schematic only and the ratio of dimensions is not to scale. Therefore, specific dimensions should be determined with reference to the description below. It is needless to mention that different relationships and ratio of dimensions may be included in different drawings.

### [Outline of the embodiments]

A management method according embodiments is management method used in a management system having an equipment to which a dynamic address is dynamically assigned and a control apparatus that performs communication with the equipment via a predetermined network using the dynamic address assigned to the equipment. The management method includes: a step A of transmitting an identification information request message for requesting identification information for identifying the equipment from the control apparatus; a step B of transmitting an identification information notification message including the identification information from the equipment to the control apparatus; and a step C of managing the equipment, on the basis of the identification information by the control apparatus. The identification information is unchanged information uniquely determined within the predetermined network.

In the embodiment, by managing the equipment on the basis of identification information that is unchanged information uniquely determined within the predetermined network, it is possible to appropriately manage an equipment even when a dynamic address (for example, a local IP address) assigned to the equipment may be changed.

Here, the predetermined network is a network that complies with a predetermined protocol. Examples of the predetermined protocol include a protocol called "ECHONET Lite" (registered trademark) or "ECHONET" (registered trademark). However, the embodiment is not limited to these protocols, and the predetermined protocol may also include a protocol (for example, SEP2.0 or KNX) other than the "ECHONET Lite" (registered trademark) or the "ECHONET" (registered trademark). It should be noted that in the predetermined network, communication is performed by using a dynamic address.

### [First Embodiment]

### (Energy management system)

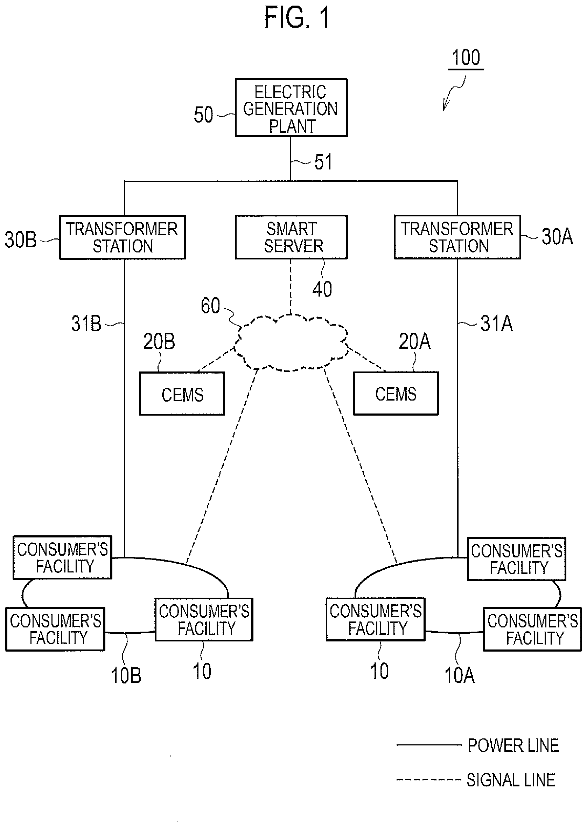

The energy management system according to the first embodiment will be described, below. Fig. 1 is a diagram showing an energy management system 100 according to the first embodiment.

As shown in Fig. 1, the energy management system 100 includes a consumer's facility, a CEMS 20, a transformer station 30, a smart server 40, and an electric generation plant 50. It is noted that the consumer's facility, the CEMS 20, the transformer station 30, and the smart server 40 are connected by a network 60.

The consumer's facility has a power generation apparatus and a power storage apparatus, for example. The power generation apparatus is an apparatus which uses fuel gas to output power such as a fuel cell, for example. The power storage apparatus such as a secondary battery is an apparatus in which power is stored.

The consumer's facility may be a detached residence, a housing complex such as an apartment house. Or, the consumer's facility may be a shop such as a corner store or a supermarket. It is noted that the consumer's facility may be a business facility such as an office building or a factory.

In the first embodiment, a consumer's facility group 10A and a consumer's facility group 10B are configured by a plurality of the consumer's facilities 10. The consumer's facility group 10A and consumer's facility group 10B are classified into each geographical region, for example.

The CEMS 20 controls an interconnection between the plurality of consumer's facilities 10 and the power grid. It is noted that the CEMS 20 may be also called a CEMS (Cluster/Community Energy Management System), since the CEMS 20 manages the plurality of consumer's facilities 10. Specifically, the CEMS 20 disconnects the plurality of consumer's facilities 10 and the power grid at a power failure or the like. On the other hand, the CEMS 20 interconnects the plurality of consumer's facilities 10 to the power grid, for example, at restoration of power.

In the first embodiment, a CEMS 20A and a CEMS 20B are provided. The CEMS 20A controls an interconnection between the consumer's facilities 10 included in the consumer's facility group 10A and the power grid, for example. The CEMS 20B controls an interconnection between the consumer's facilities 10 included in the consumer's facility group 10B and the power grid, for example.

The transformer station 30 supplies power to the plurality of consumer's facilities 10 through a distribution line 31. Specifically, the transformer station 30 lowers the voltage supplied from the electric generation plant 50.

In the first embodiment, a transformer station 30A and a transformer station 30B are provided. The transformer station 30A supplies power to the consumer's facilities 10 included in the consumer's facility group 10A through a distribution line 31A, for example. The transformer station 30B supplies power to the consumer's facilities 10 included in the consumer's facility group 10B through a distribution line 31B, for example.

The smart server 40 manages a plurality of the CEMSs 20 (here, the CEMS 20A and CEMS 20B). Further, the smart server 40 manages a plurality of the transformer stations 30 (here, the transformer station 30A and the transformer station 30B). In other words, the smart server 40 integrally manages the consumer's facilities 10 included in the consumer's facility groups 10A and 10B. For example, the smart server 40 has a function of balancing the power to be supplied to the consumer's facility group 10A and the power to be supplied to the consumer's facility group 10B.

The electric generation plant 50 generates power by thermal power, solar power, wind power, water power, atomic power or the like. The electric generation plant 50 supplies power to the plurality of the transformer stations 30 (here, the transformer station 30A and the transformer station 30B) through an electric feeder line 51.

The network 60 is connected to each apparatus via a signal line. The network 60 is an Internet, a wide area network, a narrow area network, and a mobile phone network, for example.

### (Consumer's facility)

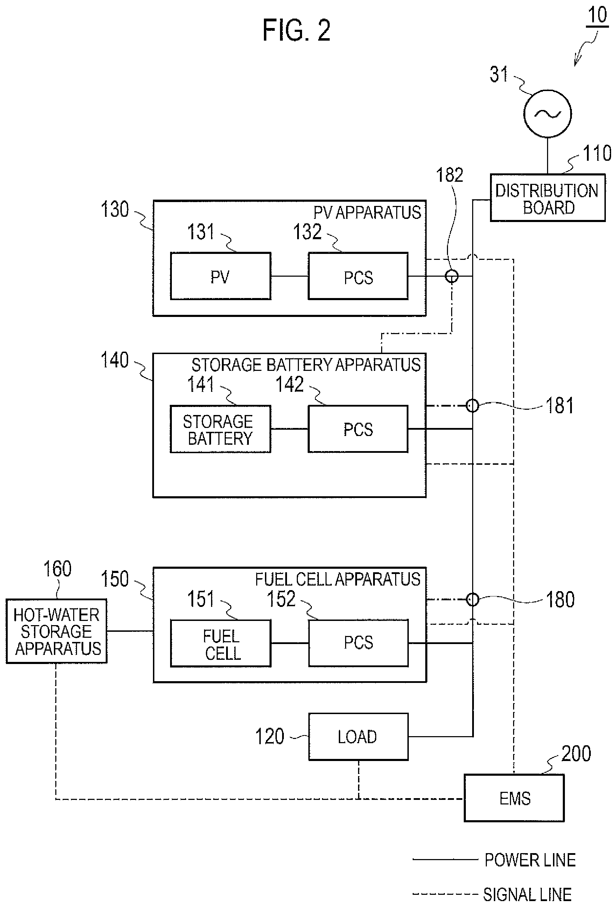

The consumer's facility according to the first embodiment will be described, below. Fig. 2 is a diagram showing the details of the consumer's facility 10 according to the first embodiment.

As shown in Fig. 2, the consumer's facility 10 has a distribution board 110, a load 120, a PV apparatus 130, a storage battery apparatus 140, a fuel cell apparatus 150, a hot-water storage apparatus 160, and an EMS 200.

In the first embodiment, the consumer's facility 10 has an ammeter 180, an ammeter 181, and an ammeter 182.

The ammeter 180 is used for the load following control on the fuel cell apparatus 150. The ammeter 180 is arranged downstream of a connection point between the storage battery apparatus 140 and a power line (at the side away from the grid) and upstream of a connection point between the fuel cell apparatus 150 and the power line (at the side closer to the grid), on the power line connecting each equipment (for example, the storage battery apparatus 140 and the fuel cell apparatus 150) and the grid. It goes without saying that the ammeter 180 is arranged upstream (at the side closer to the grid) of the connection point between the load 120 and the power line.

The ammeter 181 is used for checking the existence of the flow of power from the storage battery apparatus 140 to the grid (reverse power flow). The ammeter 181 is arranged upstream of a connection point between the storage battery apparatus 140 and a power line (at the side closer to the grid), on the power line connecting each equipment (for example, the storage battery apparatus 140) and the grid.

The ammeter 182 is used for measuring the power generated by the PV apparatus 130. The ammeter 182 is arranged at the side of the PV apparatus 130 from a connection point between a power line connecting each equipment (for example, the PV apparatus 130) and the grid, and the PV apparatus 130.

It should be noted that in the first embodiment, each equipment is connected to the power line in the short-distance order to the grid of the PV apparatus 130, the storage battery apparatus 140, the fuel cell apparatus 150, and the load 120.

The distribution board 110 is connected to the distribution line 31 (a grid). The distribution board 110 is connected, via a power line, to the load 120, the PV apparatus 130, the storage battery apparatus 140, and the fuel cell apparatus 150.

The load 120 is an apparatus which consumes the power supplied via a power line. Examples of the load 120 include an apparatus such as a refrigerator, a freezer, a lighting, and an air conditioner.

The PV apparatus 130 has a PV 131 and a PCS 132. The PV 131 is an example of the power generation apparatus, and is a solar light power generation apparatus (Photovoltaic Device) which generates power in response to reception of solar light. The PV 131 outputs the generated DC power. The amount of power generated by the PV 131 varies depending on the amount of solar radiation entering the PV 131. The PCS 132 is an apparatus (Power Conditioning System) which converts the DC power output from the PV 131, into AC power. The PCS 132 outputs the AC power to the distribution board 110 via a power line.

In the first embodiment, the PV apparatus 130 may have a pyranometer which measures the amount of solar radiation entering the PV 131.

The PV apparatus 130 is controlled by an MPPT (Maximum Power Point Tracking) method. In particular, the PV apparatus 130 optimizes an operation point (point determined by an operation-point voltage value and power value, or a point determined by an operation-point voltage value and electric current value) of the PV 131.

The storage battery apparatus 140 has a storage battery 141 and a PCS 142. The storage battery 141 is an apparatus which accumulates power. The PCS 142 is an apparatus (Power Conditioning System) which converts the AC power supplied from the distribution line 31 (grid), into DC power. Further, the PCS 142 converts the DC power output from the storage battery 141, into AC power.

The fuel cell apparatus 150 has a fuel cell 151 and a PCS 152. The fuel cell 151 is an example of a power generation apparatus, and an apparatus which generates power by using a fuel (gas). The PCS 152 is an apparatus (Power Conditioning System) which converts the DC power output from the fuel cell 151, into AC power.

The fuel cell apparatus 150 is operated by load following control. In particular, the fuel cell apparatus 150 controls the fuel cell 151 so that the power output from the fuel cell 151 reaches a target power of the load following control. In other words, the fuel cell apparatus 150 controls the power output from the fuel cell 151 so that the product of an electric current value detected by the ammeter 180 and a voltage value detected by the PCS 152 becomes target received power.

A hot-water storage apparatus 160 is an apparatus which either generates hot water using fuel (gas), or maintains the water temperature. Specifically, the hot-water storage apparatus 160 has a hot-water storage tank where the water supplied from the hot-water storage tank is warmed by the heat generated by burning of fuel (gas) or the exhaust heat generated by drive (power generation) of the fuel cell 151. In particular, the hot-water storage apparatus 160 warms the water supplied from the hot-water storage tank and feeds the warmed water back to the hot-water storage tank.

It should be noted that in the embodiment, the fuel cell apparatus 150 and the hot-water storage apparatus 160 configure the hot-water supply unit 170 (the hot-water supply system).

The EMS 200 is arranged in the consumer's facility 10, and controls the operation of the load 120 or the distributed power source (the PV apparatus 130, the storage battery apparatus 140, or the fuel cell apparatus 150) to manage an energy state in the consumer's facility 10. Specifically, the EMS 200 is an apparatus (Energy Management System) which controls the PV apparatus 130, the storage battery apparatus 140, the fuel cell apparatus 150, and the hot-water storage apparatus 160. Specifically, the EMS 200 is connected to the PV apparatus 130, the storage battery apparatus 140, the fuel cell apparatus 150, and the hot-water storage apparatus 160 via a signal line, and controls the PV apparatus 130, the storage battery apparatus 140, the fuel cell apparatus 150, and the hot-water storage apparatus 160. Further, the EMS 200 controls an operation mode of the load 120 to control the power consumption of the load 120. For example, the EMS 200 may operate a household product in a power-save mode. Alternatively, the EMS 200 controls the load 120 to change a comfortable feeling without changing the consumed power of the load 120. For example, the EMS 200 may perform wind direction control of an air conditioner or dimmer control of an LED illumination.

Further, the EMS 200 is connected, via the network 60, to various types of servers. The various types of servers store information such as a purchase unit price of power supplied from a grid, a sales unit price of the power supplied from the grid, and a purchase unit price of fuel gas, for example (hereinafter, energy rate information).

Alternatively, various types of servers store information for predicting the power consumption of the load 120 (hereinafter, consumed-energy prediction information), for example. The consumed-energy prediction information may be generated on the basis of an actual value of the power consumption of the load 120 in the past, for example. Alternatively, the consumed-energy prediction information may be a model of the power consumption of the load 120.

Alternatively, various types of servers store information for predicting an amount of power generated by the PV 131 (hereinafter, PV-power-generation-amount prediction information), for example. The PV-power-generation prediction information may be a predicted value of a solar radiation entering the PV 131. Alternatively, the PV-power-generation prediction information may be a weather forecast, a season, and hours of sunlight, for example.

### (Network configuration)

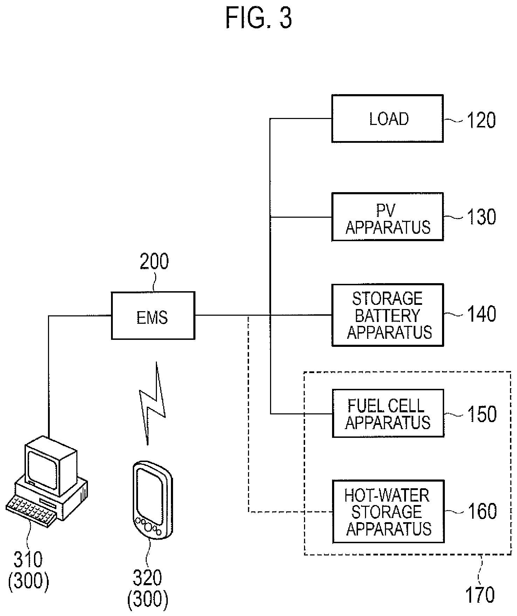

Hereinafter, a network configuration according to the first embodiment will be described. Fig. 3 is a diagram showing a network configuration according to the first embodiment.

As shown in Fig. 3, the network is configured by the load 120, the PV apparatus 130, the storage battery apparatus 140, the fuel cell apparatus 150, the hot-water storage apparatus 160, the EMS 200, and a user terminal 300. The user terminal 300 includes a user terminal 310 and a user terminal 320.

The user terminal 310 is connected to the EMS 200, and displays, through a web browser, the information for visualization of energy consumption, a power generation amount, or a power storage amount (hereinafter, visualization information) of each equipment (the load 120, the PV apparatus 130, the storage battery apparatus 140, the fuel cell apparatus 150, and the hot-water storage apparatus 160). In such a case, the EMS 200 generates the visualization information in a format such as HTML, and transmits the generated visualization information to the user terminal 310. The connection type between the user terminal 310 and the EMS 200 may be wired or may be wireless. The user terminal 310 is a personal computer, for example.

The user terminal 320 is connected to the EMS 200, and displays the visualization information through an application. In such a case, the EMS 200 transmits the information indicating energy to be consumed in each equipment, an amount of power to be generated therein, and an amount of power to be accumulated therein, to the user terminal 320. The application of the user terminal 320 generates the visualization information on the basis of the information received from the EMS 200, and displays the generated visualization information. The connection type between the user terminal 320 and the EMS 200 may be wired or may be wireless. The user terminal 320 is a smart phone, for example.

As described above, in the first embodiment, the fuel cell apparatus 150 and the hot-water storage apparatus 160 configure the hot-water supply unit 170. Therefore, the hot-water storage apparatus 160 need not necessarily possess the function of communicating with the EMS 200. In such a case, the fuel cell apparatus 150 substitutes the hot-water storage apparatus 160 and communicates messages concerning the hot-water storage apparatus 160 with the EMS 200.

In the first embodiment, the communication between the EMS 200 and each equipment (the load 120, the PV apparatus 130, the storage battery apparatus 140, the fuel cell apparatus 150, and the hot-water storage apparatus 160) is performed by a method according to a predetermined protocol. Examples of the predetermined protocol include a protocol called "ECHONET Lite" (registered trademark) or "ECHONET" (registered trademark). However, the embodiment is not limited to these protocols, and the predetermined protocol may also include a protocol (for example, SEP2.0 or KNX) other than the "ECHONET Lite" (registered trademark) or the "ECHONET" (registered trademark).

### (Application case)

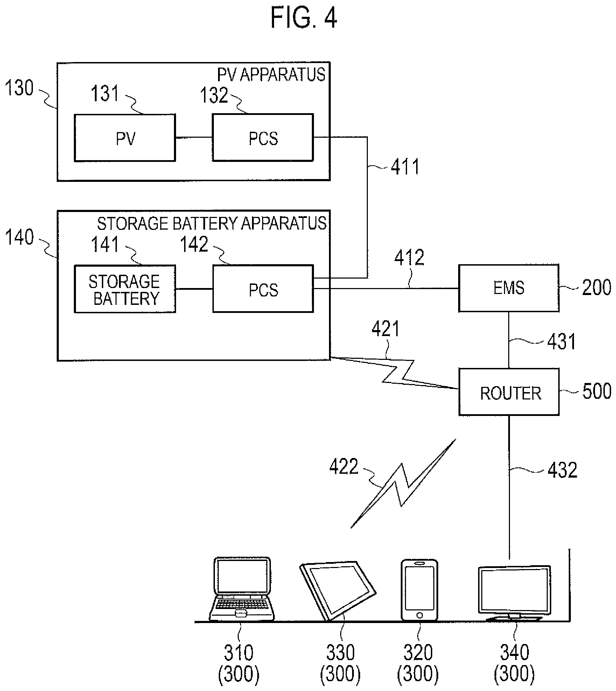

Hereinafter, the application case according to the first embodiment will be described. Fig. 4 is a diagram showing a case where the first embodiment is applied. In Fig. 4, the network configured by the PV apparatus 130, the storage battery apparatus 140, the EMS 200, and the user terminal 300 will be mainly described.

Here, in Fig. 4, as the user terminal 300, a user terminal 330 and a user terminal 340 are arranged in addition to the user terminal 310 and the user terminal 320. The user terminal 330 is a tablet terminal having an application for displaying visualization information, similarly to the user terminal 320. The user terminal 340 is a display having a web browser for displaying visualization information, similarly to the user terminal 310.

As shown in Fig. 4, the network has a router 500 to which an unchanged address (for example, a global IP address) is assigned. The router 500 functions as a DHCP (Dynamic Host Configuration Protocol) server and assigns a dynamic address (for example, a local IP address) to the PV apparatus 130, the storage battery apparatus 140, the EMS 200, and the user terminal 300. In the network shown in Fig. 4, communication is performed by using the dynamic address assigned by the router 500. As described above, the network in which communication is performed by using the dynamic address complies with a predetermined protocol such as "ECHONET Lite" (registered trademark) and "ECHONET" (registered trademark). However, the communication between the EMS 200 and the user terminal 300 may not comply with a predetermined protocol such as "ECHONET Lite" (registered trademark) and "ECHONET" (registered trademark).

In the first embodiment, the PCS 132 and the PCS 142 are connected by an interface 411. The PCS 142 and the EMS 200 are connected by an interface 412. The interface 411 and the interface 412 are wired interfaces and defined by a manufacturer of the storage battery apparatus 140 (or the PV apparatus 130).

The router 500 and the PCS 142 are connected by a radio connection 421. The router 500 and the user terminal 300 (here, the user terminal 310, the user terminal 320, and the user terminal 330) are connected by a radio connection 422. The radio connection 421 and the radio connection 422 may be replaced by a wired connection.

The EMS 200 and the router 500 are connected by a wired connection 431. The router 500 and the user terminal 300 (here, the user terminal 340) are connected by a wired connection 432. The wired connection 431 and the wired connection 432 may be replaced by a radio connection.

In such a case, information to be transferred in a relatively short interval may preferably be transmitted from the PCS 132, via the interface 411 and the interface 412, to the EMS 200. Likewise, information to be transferred in a relatively short interval may preferably be transmitted from the PCS 142, via the interface 412, to the EMS 200. For example, information indicating a status (output power, for example) of the PV apparatus 130 preferably is transmitted from the PCS 132, via the interface 411 and the interface 412, to the EMS 200. Information indicating a status (recharged power or discharged power, etc.) of the storage battery apparatus 140 is transmitted from the PCS 142, via the interface 412, to the EMS 200.

On the other hand, information allowed to be transferred in a relatively long interval may preferably be transmitted from the EMS 200, via the radio connection 421, to the PCS 142. A command instructing an operation (such as recharging or discharging) of the storage battery apparatus 140 is transmitted from the EMS 200, via the radio connection 421 and the wired connection 431, to the PCS 142. Alternatively, a command indicating an operation mode of the storage battery apparatus 140 is transmitted from the EMS 200, via the radio connection 421 and the wired connection 431, to the PCS 142.

The operation mode of the storage battery apparatus 140 includes an operation mode in a grid interconnected state and an operation mode in a self-sustained operation state. The grid interconnected state is the state in which the storage battery apparatus 140 and the grid are connected in parallel. On the other hand, the self-sustained operation state is the state in which the storage battery apparatus 140 and the grid are disconnected. An example of the self-sustained operation state may include a state in which a power failure occurs.

The operation modes in the grid interconnected state include (a) an operation mode in which the charging and discharging of the storage battery 141 is controlled so that the sales of power generated by the PV apparatus 130 (reverse power flow) is prioritized (a solar light power selling priority mode), (b) an operation mode in which the charging and discharging of the storage battery 141 is controlled so that the storage battery 141 is charged with the power generated by the PV apparatus 130 (a solar light charging mode), (c) an operation mode in which the charging and discharging of the storage battery 141 is controlled so that the power supplied from the grid does not exceed a fixed value (a peak cut mode), (d) an operation mode in which the charging and discharging of the storage battery 141 is controlled so that the storage battery 141 is charged by the power supplied from the grid, in a period when the unit price of the power supplied from the grid is lower than the threshold value (for example, nighttime) (a midnight power utilization mode), (e) an operation mode in which power is accumulated forcibly in the storage battery 141 (a forced charging mode), and (f) an operation mode in which the power accumulated in the storage battery 141 is discharged forcibly (a forced discharging mode), for example.

Here, in the (a) solar light power selling priority mode and the (b) solar light charging mode, the storage battery apparatus 140 must monitor the current measured by the ammeter 182, and then control the charging and discharging of the storage battery 141 according to the amount of power generated by the PV apparatus 130. Since the amount of power generated by the PV apparatus 130 changes momentarily, these operation modes are preferably controlled by the storage battery apparatus 140.

Similarly, in the (c) peak cut mode, the storage battery apparatus 140 must monitor the current measured by the ammeter 181 and the ammeter 182, and then control the charging and discharging of the storage battery 141 according to the amount of power supplied from the grid. The amount of power supplied from the grid is calculated on the basis of a value obtained by subtracting the electric current value measured by the ammeter 182 from the electric current value measured by the ammeter 181. Since the amount of power generated by the PV apparatus 130 and the power consumption of the load 120 change momentarily, this operation mode is preferably controlled by the storage battery apparatus 140.

In the first embodiment, the (a) solar light power selling priority mode, the (b) solar light charging mode, and the (c) peak cut mode are an example of the operation mode in which an equipment other than the storage battery 141 (for example, the PV 131) and the storage battery 141 are cooperated.

The operation modes in the self-sustained operation state include (g) an operation mode in which the power generated by the PV apparatus 130 is accumulated (hereinafter, the self-sustained charging mode), (h) an operation mode in which power is supplied to the load 120 connected to a self-sustained outlet provided in the storage battery apparatus 140 (hereinafter, the self-sustained discharging mode), and (i) an operation mode in which power is supplied to the load 120 connected to a self-sustained outlet provided in the storage battery apparatus 140 while accumulating the power generated by the PV apparatus 130 (hereinafter, the self-sustained charge/discharging mode), for example.

### (Configuration of EMS)

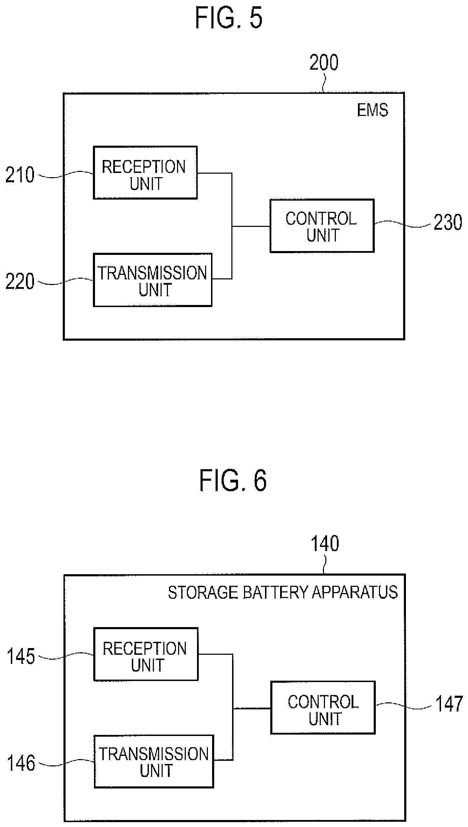

Hereinafter, an EMS according to the first embodiment will be described. Fig. 5 is a block diagram showing the EMS 200 according to the first embodiment.

As shown in Fig. 5, the EMS 200 has a reception unit 210, a transmission unit 220, and a control unit 230.

The reception unit 210 receives various types of signals from an apparatus connected via a signal line. For example, the reception unit 210 may receive information indicating the amount of power generated by the PV 131, from the PV apparatus 130. The reception unit 210 may receive information indicating the amount of power to be stored in the storage battery 141, from the storage battery apparatus 140. The reception unit 210 may receive information indicating the amount of power generated by the fuel cell 151, from the fuel cell apparatus 150. The reception unit 210 may receive information indicating the amount of hot water to be stored in the hot-water storage apparatus 160, from the hot-water storage apparatus 160.

In the first embodiment, the reception unit 210 may receive energy charge information, energy consumption prediction information, and PV power-generation amount prediction information from the various types of servers via the network 60. However, the energy charge information, the energy consumption prediction information, and the PV power-generation amount prediction information may be stored in advance in the EMS 200.

For example, in the first embodiment, the reception unit 210 receives information indicating the status of the PV apparatus 130 and the storage battery apparatus 140 via an interface (interface 412) defined by a manufacturer.

In the first embodiment, the reception unit 210 receives a classification message (hereinafter, instance list) indicating a classification of the storage battery apparatus 140, via a network (radio connection 421) that complies with a predetermined protocol. The reception unit 210 receives an identification information notification message including identification information for identifying the storage battery apparatus 140, via the network (radio connection 421) that complies with a predetermined protocol. The identification information is unchanged information uniquely determined within a network (radio connection 421) that complies with a predetermined protocol, and defined separately of the dynamic address (for example, a local IP address) assigned to the storage battery apparatus 140. The identification information is a random character string assigned by a manufacturer of the storage battery apparatus 140, for example. Alternatively, the identification information is information uniquely defined during a manufacturing process, that is, a combination of a maker code and a manufacturing serial number, for example.

The transmission unit 220 transmits various types of signals to an apparatus connected via a signal line. For example, the transmission unit 220 transmits a signal for controlling the PV apparatus 130, the storage battery apparatus 140, the fuel cell apparatus 150, and the hot-water storage apparatus 160, to each apparatus. The transmission unit 220 transmits a control signal for controlling the load 120, to the load 120.

For example, in the first embodiment, the transmission unit 220 transmits a command indicating an operation of the storage battery apparatus 140, via a network (radio connection 421) that complies with a predetermined protocol. Alternatively, the transmission unit 220 transmits a command indicating an operation mode of the storage battery apparatus 140, via a network (radio connection 421) that complies with a predetermined protocol.

In the first embodiment, the transmission unit 220 transmits an identification information request message for requesting identification information for identifying the storage battery apparatus 140, via the network (radio connection 421) that complies with a predetermined protocol.

The control unit 230 controls the load 120, the PV apparatus 130, the storage battery apparatus 140, the fuel cell apparatus 150, and the hot-water storage apparatus 160.

Specifically, the control unit 230 manages the storage battery apparatus 140 on the basis of the identification information of the storage battery apparatus 140, in a network that complies with a predetermined protocol. More particularly, the control unit 230 manages classification of the storage battery apparatus 140 and the identification information of the storage battery apparatus 140 in an associated manner. Further, the control unit 230 preferably manages the classification of the storage battery apparatus 140 and the identification information of the storage battery apparatus 140 associated with the dynamic address (for example, a local IP address) assigned to the storage battery apparatus 140.

### (Configuration of storage battery apparatus)

The storage battery apparatus according to the first embodiment will be described, below. Fig. 6 is a block diagram showing the storage battery apparatus 140 according to the first embodiment.

As shown in Fig. 6, the storage battery apparatus 140 has a reception unit 145, a transmission unit 146, and a control unit 147. In the first embodiment, the reception unit 145, the transmission unit 146, and the control unit 147 are arranged in the PCS 142.

The reception unit 145 receives various information from the EMS 200. The reception unit 145 receives information indicating the status of the PV apparatus 130 via an interface (the interface 411) defined by a manufacturer.

In the first embodiment, the reception unit 145 transmits an identification information request message for requesting identification information for identifying the storage battery apparatus 140, via a network (radio connection 421) that complies with a predetermined protocol.

The transmission unit 146 transmits various information to the EMS 200. For example, the transmission unit 146 transmits information indicating the status of the PV apparatus 130 and the storage battery apparatus 140 via an interface (interface 412) defined by a manufacturer.

In the first embodiment, the transmission unit 146 transmits a classification message (hereinafter, instance list) indicating a classification of the storage battery apparatus 140, via a network (radio connection 421) that complies with a predetermined protocol. Specifically, the transmission unit 146 transmits the instance list in response to a predetermined trigger. Here, the predetermined trigger includes power on of the storage battery apparatus 140 and a change of the dynamic address assigned to the storage battery apparatus 140, for example. It is preferable that the transmission unit 146 repeatedly transmits the instance list over a predetermined period.

The transmission unit 146 transmits an identification information notification message including identification information for identifying the storage battery apparatus 140, via a network (radio connection 421) that complies with a predetermined protocol. The transmission unit 146 transmits the identification information notification message, in response to the identification information request message.

The control unit 147 controls the storage battery apparatus 140. Specifically, the control unit 147 controls the PCS 142 on the basis of a command input by a user. Alternatively, the control unit 147 controls the PCS 142 on the basis of a command received by the PCS 142 from the EMS 200.

### (Management method)

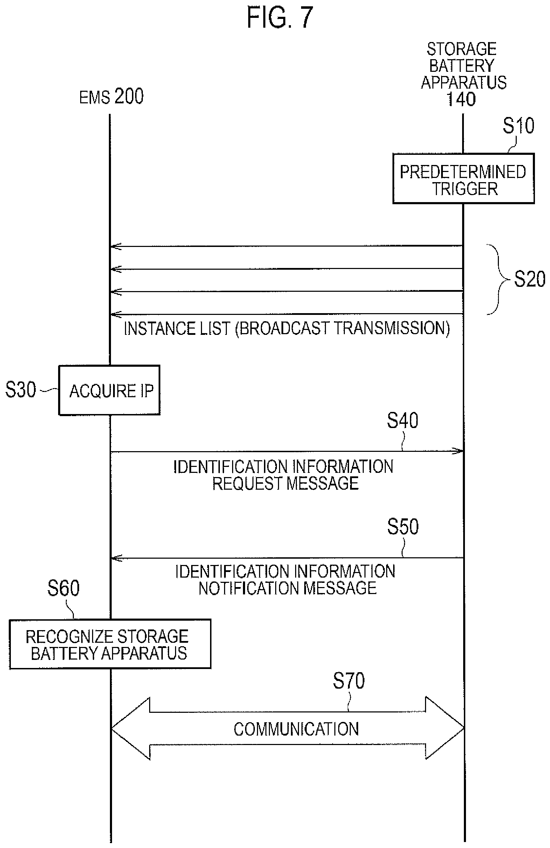

The management method according to the first embodiment will be described, below. Fig. 7 is a sequence diagram showing a management method according to the first embodiment. In Fig. 7, a sequence in a network that complies with a predetermined protocol is shown.

As shown in Fig. 7, in step S10, the storage battery apparatus 140 detects a predetermined trigger. As described above, the predetermined trigger includes power on of the storage battery apparatus 140 and a change of the dynamic address assigned to the storage battery apparatus 140, for example.

In step S20, the storage battery apparatus 140 transmits the classification message (instance list) indicating the classification of the storage battery apparatus 140, via a network (radio connection 421) that complies with a predetermined protocol. The storage battery apparatus 140 repeatedly transmits the instance list over a predetermined period.

Here, the storage battery apparatus 140 does not comprehend the dynamic address of the EMS 200, and thus, the storage battery apparatus 140 preferably transmits the instance list by broadcast or multicast.

In step S30, the EMS 200 acquires the dynamic address (for example, a local IP address) of the storage battery apparatus 140, on the basis of a transmission-source address of the instance list.

In step S40, the EMS 200 transmits the identification information request message for requesting the identification information for identifying the storage battery apparatus 140, to the storage battery apparatus 140. Here, the EMS 200 uses the dynamic address of the storage battery apparatus 140 to transmit the identification information request message, by unicast, to the storage battery apparatus 140.

In step S50, the storage battery apparatus 140 acquires the dynamic address (for example, a local IP address) of the EMS 200, on the basis of a transmission-source address of the identification information request message. Subsequently, the storage battery apparatus 140 transmits the identification information notification message including the identification information for identifying the storage battery apparatus 140, to the EMS 200. Here, the storage battery apparatus 140 uses the dynamic address of the EMS 200 to transmit the identification information notification message, by unicast, to the EMS 200.

In step S60, the EMS 200 recognizes the storage battery apparatus 140. Specifically, the EMS 200 specifies the classification of the storage battery apparatus 140 on the basis of the instance list from the storage battery apparatus 140. The EMS 200 manages the classification of the storage battery apparatus 140 and the identification information of the storage battery apparatus 140 associated with the dynamic address (for example, a local IP address) assigned to the storage battery apparatus 140.

In step S70, between the EMS 200 and the storage battery apparatus 140, communication is performed by using the dynamic address.

In the management method according to the first embodiment, every time the storage battery apparatus 140 detects a predetermined trigger, a series of the above processes are performed. Therefore, it should be noted that the EMS 200 acquires a new dynamic address every time the dynamic address of the storage battery apparatus 140 is changed, and manages the classification of the storage battery apparatus 140 and the identification information of the storage battery apparatus 140 associated with a latest dynamic address of the storage battery apparatus 140.

As described above, in the first embodiment, the EMS 200 manages the storage battery apparatus 140 on the basis of the identification information that is unchanged information uniquely determined within a predetermined network. Thus, even when the dynamic address (for example, a local IP address) assigned to the storage battery apparatus 140 may be changed, the EMS 200 is capable of appropriately managing the storage battery apparatus 140.

### [First Modification]

A first modification of the first embodiment will be described, below. Description proceeds with a particular focus on a difference from the first embodiment, below.

In the first embodiment, the EMS 200 transmits the identification information request message to the storage battery apparatus 140 in response to reception of the classification message (instance list). On the other hand, in the first modification, the EMS 200 transmits the identification information request message by broadcast or multicast irrespective of whether the classification message (instance list) is received. In other words, the EMS 200 transmits the identification information request message by broadcast or multicast even when the dynamic address of the storage battery apparatus 140 is not acquired.

### (Management method)

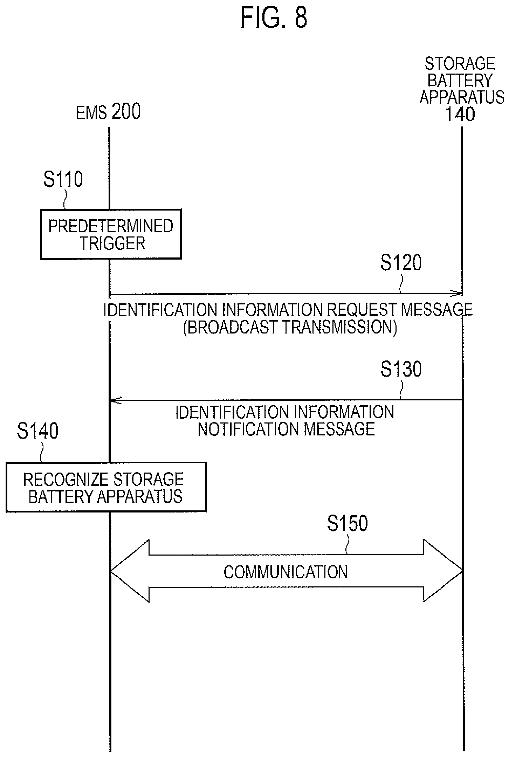

A management method according to the first modification will be described, below. Fig. 8 is a sequence diagram showing the management method according to the first modification. In Fig. 8, a sequence in a network that complies with a predetermined protocol is shown. Here, it is assumed that the EMS 200 previously manages the classification of the storage battery apparatus 140 and the identification information of the storage battery apparatus 140.

As shown in Fig. 8, in step S110, the EMS 200 detects a predetermined trigger. The predetermined trigger includes a case where a need occurs to transmit a message to the storage battery apparatus 140. For example, when the operation modes of the storage battery apparatus 140 are switched, a need occurs to transmit a message to the storage battery apparatus 140.

In step S120, the EMS 200 transmits, by broadcast or multicast, the identification information request message for requesting the identification information for identifying the storage battery apparatus 140.

In step S130, the storage battery apparatus 140 acquires the dynamic address (for example, a local IP address) of the EMS 200, on the basis of a transmission-source address of the identification information request message. Subsequently, the storage battery apparatus 140 transmits the identification information notification message including the identification information for identifying the storage battery apparatus 140, to the EMS 200. Here, the storage battery apparatus 140 uses the dynamic address of the EMS 200 to transmit the identification information notification message, by unicast, to the EMS 200.

In step S140, the EMS 200 recognizes the storage battery apparatus 140. Specifically, the EMS 200 acquires the dynamic address (for example, a local IP address) of the storage battery apparatus 140, on the basis of a transmission-source address of the identification information notification message. Further, the EMS 200 specifies the classification of the storage battery apparatus 140 on the basis of the identification information of the storage battery apparatus 140 acquired in step S130 and the previously managed identification information of the storage battery apparatus 140.

In step S150, between the EMS 200 and the storage battery apparatus 140, communication is performed by using the dynamic address.

As described above, in the first modification, when a need occurs to transmit a message to the storage battery apparatus 140, the EMS 200 transmits, by broadcast or multicast, the identification information request message for requesting the identification information for identifying the storage battery apparatus 140. Therefore, even when the dynamic address dynamically assigned to the storage battery apparatus 140 is not continuously managed, if the classification of the storage battery apparatus 140 and the identification information of the storage battery apparatus 140 are managed, then the EMS 200 is capable of appropriately transmitting a message to the storage battery apparatus 140.

### [Second Modification]

A second modification of the first embodiment will be described, below. Description proceeds with a particular focus on a difference from the first modification, below.

In the first modification, the EMS 200 transmits the identification information request message by broadcast or multicast, in response to a predetermined trigger. On the other hand, in the second modification, the EMS 200 transmits the identification information request message by unicast to the storage battery apparatus 140, in response to a predetermined trigger. However, as a prerequisite, the EMS 200 previously manages the classification of the storage battery apparatus 140 and the identification information of the storage battery apparatus 140 associated with the dynamic address (for example, a local IP address) assigned to the storage battery apparatus 140.

That is, in the management method according to the second modification, when a predetermined trigger is detected, the EMS 200 transmits, by unicast, the identification information request message to the storage battery apparatus 140 on the basis of the previously managed dynamic address (for example, a local IP address) assigned to the storage battery apparatus 140. The storage battery apparatus 140 acquires the dynamic address (for example, a local IP address) of the EMS 200, on the basis of a transmission-source address of the identification information request message, and uses the dynamic address of the EMS 200 to transmit, by unicast, the identification information notification message to the EMS 200.

However, when the identification information included in the identification information notification message is different from the previously managed identification information of the storage battery apparatus 140, the EMS 200 acquires the dynamic address (for example, a local IP address) of the storage battery apparatus 140 in accordance with the control method according to the first modification.

As described above, in the second modification, the EMS 200 manages the classification of the storage battery apparatus 140 and the identification information of the storage battery apparatus 140 associated with the dynamic address (for example, a local IP address) assigned to the storage battery apparatus 140. The EMS 200 transmits a message to the storage battery apparatus 140 by unicast when a predetermined trigger is detected. As a result, the EMS 200 is capable of omitting transmission and reception of the identification information request message and the identification information notification message with an equipment other than the storage battery apparatus 140 to restrain a traffic in the radio connection 421. Further, the EMS 200 acquires a new dynamic address on the basis of the identification information of the storage battery apparatus 140 even when the dynamic address of the storage battery apparatus 140 is changed. As a result, the EMS 200 is capable of appropriately transmitting a message to the storage battery apparatus 140.

### [Other Embodiments]

The present invention is explained through the above-described embodiments, but it must not be understood that this invention is limited by the statements and the drawings constituting a part of this disclosure. From this disclosure, various alternative embodiments, examples, and operational technologies will become apparent to those skilled in the art.

The EMS 200 may be HEMS (Home Energy Management System), may be SEMS (Store Energy Management System), may be BEMS (Building Energy Management System), and may be FEMS (Factory Energy Management System).

In the embodiment, as an example of equipment, the storage battery apparatus 140 is described. However, the embodiment is not limited thereto. The equipment may be a distributed power source such as the PV apparatus 130 and the fuel cell apparatus 150. Alternatively, the equipment may be the load 120 such as a refrigerator, a freezer, a lighting, and an air conditioner. Alternatively, the equipment may be the hot-water storage apparatus 160.

Although description is not particularly provided in the embodiment, the configuration provided in the EMS 200 may be arranged in any one of a plurality of equipments.

Although description is not provided in the embodiment, it may be possible to provide a program for causing a computer to execute each process performed by the EMS 200. Furthermore, the program may be recorded on a computer-readable medium. By using the computer-readable medium, it is possible to install the program in a computer. Here, the computer-readable medium recording the program thereon may include a non-transitory recording medium. The non-transitory recording medium is not particularly limited. For example, the non-transitory recording medium may include a recording medium such as a CD-ROM or a DVD-ROM.

Alternatively, it may be possible to provide a chip configured by a memory for storing therein a program for performing each process performed by the EMS 200, and a processor for executing the program stored in the memory. It may be possible to provide a memory for storing therein a program for performing each process performed by the EMS 200, and a communication processing apparatus for executing the program stored in the memory.

### INDUSTRIAL APPLICABILITY

According to the present invention, it is possible to provide a management method, a control apparatus, and a communication processing apparatus, which can appropriately manage an equipment even when a dynamic address (local IP address) assigned to the equipment may be changed.

## Claims

1. A management method used in a management system (100) having an equipment (120, 130, 140, 150, 160) to which a dynamic address is dynamically assigned and a control apparatus that performs communication with the equipment (120, 130, 140, 150, 160) via a predetermined network (60) using the dynamic address assigned to the equipment (120, 130, 140, 150, 160), comprising:
a step A of transmitting a classification message including a classification of the equipment (120, 130, 140, 150, 160) by multicast from the equipment (120, 130, 140, 150, 160);
a step B1 of specifying, at the control apparatus, the dynamic address of the equipment (120, 130, 140, 150, 160) by a source address of the classification message;
a step B2 of transmitting, after the dynamic address of the equipment (120, 130, 140, 150, 160) was specified, an identification information request message from the control apparatus (200) to the equipment (120, 130, 140, 150, 160) based on the specified dynamic address, the identification information request message requesting identification information for identifying the equipment (120, 130, 140, 150, 160);
a step C of transmitting an identification information notification message including the identification information from the equipment (120, 130, 140, 150, 160) to the control apparatus (200); and
a step D of managing the equipment (120, 130, 140, 150, 160), on the basis of the identification information and the dynamic address by the control apparatus (200), wherein
the identification information is unchanged information uniquely determined within the predetermined network (60).

2. The management method according to claim 1, wherein
in the step B, the identification information request message is transmitted by unicast.

3. The management method according to claim 1, wherein
in the step A, the classification message is transmitted by multicast when the equipment (120, 130, 140, 150, 160) is powered on or the dynamic address assigned to the equipment (120, 130, 140, 150, 160) is changed.

4. The management method according to claim 1, wherein
the equipment (120, 130, 140, 150, 160) is a load (120) or a distributed power source (130, 140, 150) arranged in a consumer's facility (10),
the control apparatus (200) is arranged in the consumer's facility (10), and
in the step D, the control apparatus (200) manages an energy state in the consumer's facility (10) by controlling an operation of the load (120) or the distributed power source (130, 140, 150).

5. The management method according to claim 1, wherein
in the step B, the identification information request message is transmitted by broadcast or multicast from the control apparatus (200).

6. The management method according to claim 3, wherein
in the step C, the identification information notification message is transmitted by unicast from the equipment (120, 130, 140, 150, 160) to the control apparatus (200).

7. The management method according to claim 1, wherein
an interface that connects the equipment (120, 130, 140, 150, 160) and the control apparatus (200) is provided, besides the predetermined network (60).

8. A control apparatus (200) configured to perform communication with an equipment (120, 130, 140, 150, 160) via a predetermined network (60) using a dynamic address dynamically assigned to the equipment (120, 130, 140, 150, 160), comprising:
a reception unit (210) which is configured to receive a classification message including a classification of the equipment (120, 130, 140, 150, 160) by multicast;
means for specifying the dynamic address of the equipment (120, 130, 140, 150, 160) by a source address of the classification message;
a transmission unit (220) which is configured to transmit after the dynamic address of the equipment (120, 130, 140, 150, 160) was specified, an identification information request message to the equipment (120, 130, 140, 150, 160), the identification information request message requesting identification information for identifying the equipment (120, 130, 140, 150, 160); and
a management unit (230) which is configured to manage the equipment (120, 130, 140, 150, 160) on the basis of the identification information and the dynamic address, wherein
the reception unit (210) is configured to receive an identification information notification message including the identification information from the equipment (120, 130, 140, 150, 160), the identification information notification message is transmitted from the equipment (120, 130, 140, 150, 160) in response to the identification information request message, and
the identification information is unchanged information uniquely determined within the predetermined network (60).

9. A communication processing apparatus for performing communication among a plurality of equipments (120, 130, 140, 150, 160) to which a dynamic address is dynamically assigned via a predetermined network (60) by using the dynamic address, wherein
the communication processing apparatus is configured to be mounted in any one mounting equipment of the plurality of equipments (120, 130, 140, 150, 160),
the communication processing apparatus is configured to execute on the mounting equipment:
a first reception processing of receiving a classification message including a classification of one equipment (120, 130, 140, 150, 160) by multicast;
a specifying process of specifying the dynamic address of the equipment (120, 130, 140, 150, 160) by a source address of the classification message;
a transmission process of transmitting, after the dynamic address of the equipment (120, 130, 140, 150, 160) was specified, an identification information request message to the one equipment (120, 130, 140, 150, 160), the identification information request message requesting identification information for identifying the one equipment (120, 130, 140, 150, 160) to the one equipment (120, 130, 140, 150, 160);
a second reception process of receiving an identification information notification message including the identification information from the one equipment (120, 130, 140, 150, 160), the identification information notification message is transmitted from the one equipment (120, 130, 140, 150, 160) in response to the identification information request message; and
a management process of managing the one equipment (120, 130, 140, 150, 160) on the basis of the identification information and the dynamic address, wherein
the identification information is unchanged information uniquely determined within the predetermined network (60).

## Patentansprüche

1. Verwaltungsverfahren, das in einem Verwaltungssystem (100) verwendet wird und Folgendes aufweist: eine Ausrüstung (120, 130, 140, 150, 160), der dynamisch eine Adresse zugewiesen wird und eine Steuervorrichtung, die eine Kommunikation mit der Ausrüstung (120, 130, 140, 150, 160) über ein vorbestimmtes Netzwerk (60) durchführt unter Verwendung der der Ausrüstung zugewiesenen dynamischen Adresse (120, 130, 140, 150, 160), umfassend:
einen Schritt A zum Übertragen einer Klassifizierungsnachricht, die eine Klassifizierung der Ausrüstung (120, 130, 140, 150, 160) durch Multicast von der Ausrüstung (120, 130, 140, 150, 160) enthält;
einen Schritt B1 zum Spezifizieren der dynamischen Adresse der Ausrüstung (120, 130, 140, 150, 160) an der Steuervorrichtung durch eine Quelladresse der Klassifizierungsnachricht;
einen Schritt B2 zum Senden nach Angabe der dynamischen Adresse der Ausrüstung (120, 130, 140, 150, 160) einer Identifikationsinformations-Anforderungsnachricht von der Steuervorrichtung (200) an die Ausrüstung (120, 130, 140, 150, 160) basierend auf der angegebenen dynamischen Adresse, wobei die Identifikationsinformations-Anforderungsnachricht Identifikationsinformationen zum Identifizieren der Ausrüstung (120, 130, 140, 150, 160) anfordert;
einen Schritt C zum Übertragen einer Identifikationsinformations-Benachrichtigungsnachricht, die die Identifikationsinformationen enthält, von der Ausrüstung (120, 130, 140, 150, 160) an die Steuervorrichtung (200); und
einen Schritt D zum Verwalten der Ausrüstung (120, 130, 140, 150, 160) auf der Grundlage der Identifikationsinformationen und der dynamischen Adresse durch die Steuervorrichtung (200), wobei
die Identifikationsinformationen unveränderte Informationen sind, die innerhalb des vorbestimmten Netzwerks (60) eindeutig bestimmt sind.

2. Verwaltungsverfahren nach Anspruch 1, wobei
in Schritt B die Identifikationsinformations-Anforderungsnachricht durch Unicast übertragen wird.

3. Verwaltungsverfahren nach Anspruch 1, wobei
in Schritt A die Klassifizierungsnachricht per Multicast übertragen wird, wenn die Ausrüstung (120, 130, 140, 150, 160) eingeschaltet wird oder die der Ausrüstung (120, 130, 140, 150, 160) zugewiesene dynamische Adresse geändert wird.

4. Verwaltungsverfahren nach Anspruch 1, wobei
die Ausrüstung (120, 130, 140, 150, 160) eine Last (120) oder eine verteilte Energiequelle (130, 140, 150) ist, die in einer Verbraucheranlage (10) angeordnet ist,
die Steuervorrichtung (200) in der Verbrauchereinrichtung (10) angeordnet ist, und
in Schritt D die Steuervorrichtung (200) einen Energiezustand in der Verbrauchereinrichtung (10) durch Steuern eines Betriebs der Last (120) oder der verteilten Energiequelle (130, 140, 150) verwaltet.

5. Verwaltungsverfahren nach Anspruch 1, wobei
in Schritt B die Identifikationsinformations-Anforderungsnachricht durch Rundsendung oder Multicast von der Steuervorrichtung (200) übertragen wird.

6. Verwaltungsverfahren nach Anspruch 3, wobei
in Schritt C die Identifikationsinformations-Benachrichtigungsnachricht 20 durch Unicast von der Ausrüstung (120, 130, 140, 150, 160) an die Steuervorrichtung (200) übertragen wird.

7. Verwaltungsverfahren nach Anspruch 1, wobei
neben dem vorbestimmten Netzwerk (60) eine Schnittstelle vorgesehen ist, die die Ausrüstung (120, 130, 140, 150, 160) und die Steuervorrichtung (200) verbindet.

8. Steuervorrichtung (200), die dafür konfiguriert ist, eine Kommunikation mit einer Ausrüstung (120, 130, 140, 150, 160) über ein vorbestimmtes Netzwerk (60) unter Verwendung einer dynamischen Adresse durchzuführen, die der Ausrüstung (120, 130, 140, 150, 160) dynamisch zugewiesen wurde, umfassend:
eine Empfangseinheit (210), die dafür konfiguriert ist, eine Klassifizierungsnachricht einschließlich einer Klassifizierung der Ausrüstung (120, 130, 140, 150, 160) durch Multicast zu empfangen;
ein Mittel zum Spezifizieren der dynamischen Adresse der Ausrüstung (120, 130, 140, 150, 160) durch eine Quelladresse der Klassifizierungsnachricht;
eine Sendeeinheit (220), die dafür konfiguriert ist, nach Angabe der dynamischen Adresse der Ausrüstung (120, 130, 140, 150, 160) eine Identifikationsinformations-Anforderungsnachricht an die Ausrüstung (120, 130, 140, 150, 160) zu senden, wobei die Identifikationsinformations-Anforderungsnachricht Identifikationsinformationen zum Identifizieren der Ausrüstung (120, 130, 140, 150, 160) anfordert; und
eine Verwaltungseinheit (230), die dafür konfiguriert ist, die Ausrüstung (120, 130, 140, 150, 160) auf der Basis der Identifikationsinformationen und der dynamischen Adresse zu verwalten, wobei
die Empfangseinheit (210) dafür konfiguriert ist, eine Identifikationsinformations-Benachrichtigungsnachricht, die die Identifikationsinformationen von der Ausrüstung (120, 130, 140, 150, 160) enthält, zu empfangen, wobei die Identifikationsinformations-Benachrichtigungsnachricht von der Ausrüstung (120, 130, 140, 150, 160) als Antwort auf die Identifikationsinformations-Anforderungsnachricht gesendet wird, und
die Identifikationsinformationen unveränderte Informationen sind, die innerhalb des vorbestimmten Netzwerks (60) eindeutig bestimmt sind.

9. Kommunikationsverarbeitungsvorrichtung zum Durchführen einer Kommunikation zwischen einer Vielzahl von Ausrüstungen (120, 130, 140, 150, 160), denen eine dynamische Adresse über ein vorbestimmtes Netzwerk (60) unter Verwendung der dynamischen Adresse dynamisch zugewiesen wird, wobei
die Kommunikationsverarbeitungsvorrichtung dafür konfiguriert ist, in einer beliebigen Montageausrüstung der Vielzahl von Ausrüstungen (120, 130, 140, 150, 160) montiert zu werden,
die Kommunikationsverarbeitungsvorrichtung dafür konfiguriert ist, auf der Montageausrüstung Folgendes auszuführen:
eine erste Empfangsverarbeitung zum Empfangen einer Klassifizierungsnachricht, die eine Klassifizierung einer Ausrüstung (120, 130, 140, 150, 160) durch Multicast enthält;
einen Spezifizierungsprozess zum Spezifizieren der dynamischen Adresse der Ausrüstung (120, 130, 140, 150, 160) durch eine Quelladresse der Klassifizierungsnachricht;
einen Übertragungsprozess zum Übertragen einer Identifikationsinformations-Anforderungsnachricht an die eine Ausrüstung (120, 130, 140, 150, 160), nachdem die dynamische Adresse der Ausrüstung (120, 130, 160, 150, 160) spezifiziert wurde, wobei die Identifikationsinformations-Anforderungsnachricht Identifikationsinformationen zum Identifizieren der einen Ausrüstung (120, 130, 140, 150, 160) gegenüber der einen Ausrüstung (120, 130, 140, 150, 160) anfordert;
ein zweiter Empfangsprozess zum Empfangen einer Identifikationsinformationsbenachrichtigungsnachricht die Identifikationsinformationen von der einen Einrichtung (120, 130, 140, 150, 160) enthält, wobei die Identifikationsinformations-Benachrichtigungsnachricht von der einen Ausrüstung (120, 130, 140, 150, 160) als Antwort auf die Identifikationsinformations-Anforderungsnachricht gesendet wird, und
einen Verwaltungsprozess zum Verwalten der einen Ausrüstung (120, 130, 140, 150, 160) auf der Grundlage der Identifikationsinformationen und der dynamischen Adresse, wobei
die Identifikationsinformationen unveränderte Informationen sind, die innerhalb des vorbestimmten Netzwerks (60) eindeutig bestimmt sind.

## Revendications

1. Procédé de gestion utilisé dans un système de gestion (100) ayant un équipement (120, 130, 140, 150, 160) auquel une adresse dynamique est attribuée dynamiquement et un appareil de commande qui réalise une communication avec l'équipement (120, 130, 140, 150, 160) par le biais d'un réseau prédéterminé (60) en utilisant l'adresse dynamique attribuée à l'équipement (120, 130, 140, 150, 160), comprenant :
une étape A de transmission d'un message de classification comprenant une classification de l'équipement (120, 130, 140, 150, 160) par multidiffusion à partir de l'équipement (120, 130, 140, 150, 160) ;
une étape B1 de spécification, au niveau de l'appareil de commande, de l'adresse dynamique de l'équipement (120, 130, 140, 150, 160) par une adresse source du message de classification ;
une étape B2 de transmission, après que l'adresse dynamique de l'équipement (120, 130, 140, 150, 160) ait été spécifiée, d'un message de demande d'informations d'identification depuis l'appareil de commande (200) vers l'équipement (120, 130, 140, 150, 160) en fonction de l'adresse dynamique spécifiée, le message de demande d'informations d'identification demandant des informations d'identification pour identifier l'équipement (120, 130, 140, 150, 160) ;
une étape C de transmission d'un message de notification d'informations d'identification incluant les informations d'identification depuis l'équipement (120, 130, 140, 150, 160) vers l'appareil de commande (200) ; et
une étape D de gestion de l'équipement (120, 130, 140, 150, 160), en fonction des informations d'identification et de l'adresse dynamique, par l'appareil de commande (200),
les informations d'identification étant des informations inchangées déterminées de manière unique dans le réseau prédéterminé (60).

2. Procédé de gestion selon la revendication 1, dans lequel
dans l'étape B, le message de demande d'informations d'identification est transmis par monodiffusion.

3. Procédé de gestion selon la revendication 1, dans lequel
dans l'étape A, le message de classification est transmis par multidiffusion lorsque l'équipement (120, 130, 140, 150, 160) est allumé ou lorsque l'adresse dynamique attribuée à l'équipement (120, 130, 140, 150, 160) est changée.

4. Procédé de gestion selon la revendication 1, dans lequel
l'équipement (120, 130, 140, 150, 160) est une charge (120) ou une source d'alimentation distribuée (130, 140, 150) agencée dans une installation d'un consommateur (10),
l'appareil de commande (200) est agencé dans l'installation du consommateur (10), et
dans l'étape (D), l'appareil de commande (200) gère un état d'énergie dans l'installation du consommateur (10) en commandant une opération de la charge (120) ou de la source d'alimentation distribuée (130, 140, 150).

5. Procédé de gestion selon la revendication 1, dans lequel
dans l'étape B, le message de demande d'informations d'identification est transmis par diffusion ou multidiffusion à partir de l'appareil de commande (200).

6. Procédé de gestion selon la revendication 3, dans lequel
dans l'étape C, le message de notification d'informations d'identification est transmis par monodiffusion depuis l'équipement (120, 130, 140, 150, 160) vers l'appareil de commande (200).

7. Procédé de gestion selon la revendication 1, dans lequel
une interface qui connecte l'équipement (120, 130, 140, 150, 160) et l'appareil de commande (200) est mise à disposition, en plus du réseau prédéterminé (60).

8. Appareil de commande (200), configuré pour réaliser une communication avec un équipement (120, 130, 140, 150, 160) par le biais d'un réseau prédéterminé (60) en utilisant une adresse dynamique attribuée dynamiquement à l'équipement (120, 130, 140, 150, 160), comprenant :
une unité de réception (210), qui est configurée pour recevoir un message de classification comprenant une classification de l'équipement (120, 130, 140, 150, 160) par multidiffusion ;
un moyen de spécification de l'adresse dynamique de l'équipement (120, 130, 140, 150, 160) par une adresse source du message de classification ;
une unité de transmission (220) qui est configurée pour transmettre, après que l'adresse dynamique de l'équipement (120, 130, 140, 150, 160) ait été spécifiée, un message de demande d'informations d'identification à l'équipement (120, 130, 140, 150, 160), le message de demande d'informations d'identification demandant des informations d'identification pour identifier l'équipement (120, 130, 140, 150, 160) ; et
une unité de gestion (230) qui est configurée pour gérer l'équipement (120, 130, 140, 150, 160) en fonction des informations d'identification et de l'adresse dynamique,
l'unité de réception (210) étant configurée pour recevoir un message de notification d'informations d'identification incluant les informations d'identification à partir de l'équipement (120, 130, 140, 150, 160), le message de notification d'informations d'identification étant transmis à partir de l'équipement (120, 130, 140, 150, 160) en réponse au message de demande d'informations d'identification, et
les informations d'identification étant des informations inchangées déterminées de manière unique dans le réseau prédéterminé (60).

9. Appareil de traitement de communications destiné à réaliser une communication parmi une pluralité d'équipements (120, 130, 140, 150, 160) auxquels une adresse dynamique est attribuée dynamiquement par le biais d'un réseau prédéterminé (60) en utilisant l'adresse dynamique,
l'appareil de traitement de communications étant configuré pour être monté dans un équipement de montage quelconque de la pluralité d'équipements (120, 130, 140, 150, 160),
l'appareil de traitement de communications étant configuré pour exécuter sur l'équipement de montage :
un premier processus de réception pour la réception d'un message de classification incluant une classification d'un équipement (120, 130, 140, 150, 160) par multidiffusion ;
un processus de spécification pour la spécification de l'adresse dynamique de l'équipement (120, 130, 140, 150, 160) par une adresse source du message de classification ;
un processus de transmission pour la transmission, après que l'adresse dynamique de l'équipement (120, 130, 140, 150, 160) ait été spécifiée, d'un message de demande d'informations d'identification à l'équipement (120, 130, 140, 150, 160), le message de demande d'informations d'identification demandant des informations d'identification pour identifier l'équipement (120, 130, 140, 150, 160) à l'équipement (120, 130, 140, 150, 160) ;
un deuxième processus de réception pour la réception d'un message de notification d'informations d'identification incluant les informations d'identification à partir de l'équipement (120, 130, 140, 150, 160), le message de notification d'informations d'identification étant transmis à partir de l'équipement (120, 130, 140, 150, 160) en réponse au message de demande d'informations d'identification ; et
un processus de gestion pour la gestion de l'équipement (120, 130, 140, 150, 160) en fonction des informations d'identification et de l'adresse dynamique,
les informations d'identification étant des informations inchangées déterminées de manière unique dans le réseau prédéterminé (60).
